# EUROPEAN PATENT APPLICATION

(11) **EP 4 782 314 A1**
(43) Date of publication of application: **29.07.2026**
(21) Application number: 24899680.3
(22) Date of filing: 26.11.2024
(51) Int. Cl.: B62D 35/02

(54) **FLOW GUIDE APPARATUS, MUFFLER SYSTEM, AND VEHICLE**

(30) Priority: 04.12.2023 CN 202311648464
(71) Applicant: Beijing Chehejia Automobile Technology Co., Ltd., Beijing 101300 (CN)
(72) Inventor: ZHAO, Zhichao, Beijing 101300 (CN); ZHANG, Xiaowei, Beijing 101300 (CN); YANG, Xiaoxin, Beijing 101300 (CN); NA, Jia, Beijing 101300 (CN); ZHAN, Jia, Beijing 101300 (CN)
(74) Representative: Loo, Chi Ching
(86) International application number: PCT/CN2024/134594
(87) International publication number: WO 2025/119040

(57) **Abstract**

The present disclosure relates to a flow guide apparatus, a muffler system, and a vehicle, the flow guide apparatus comprising a flow guide panel main body, the flow guide panel main body being arranged on a bottom face of a tail muffler of a vehicle, and, in a direction from the head to the tail of the vehicle, the flow guide panel main body being arranged to be located on the side of a rear bumper of the vehicle which is close to the vehicle head. In the direction from the head to the tail of the vehicle, the face of the flow guide panel main body facing away from at least the tail muffler is formed as a flow guide face obliquely arranged in a direction away from the tail muffler, and the end of the flow guide face close to the rear bumper is lower than a bottom face of the rear bumper, such that the airflow discharged through the tail muffler can flow along the flow guide face so as to be guided downward. Thus, the airflow can be prevented to a certain extent from directly flowing backward and then flowing onto the rear bumper located behind the tail muffler hence generating turbulence, which can effectively reduce the air resistance and improve the economy of the vehicle.

## Description

### CROSS-REFERENCE TO THE RELATED APPLICATION

The present application claims priority to Chinese patent application No. 202311648464.9, entitled "FLOW GUIDE APPARATUS, MUFFLER SYSTEM, AND VEHICLE", filed before the China National Intellectual Property Administration (CNIPA) on December 04, 2023, the entire contents of which are incorporated herein by reference.

### TECHINCAL FIELD

The present disclosure relates to the technical field of vehicles, and in particular, to a flow guide apparatus, a muffler system, and a vehicle.

### BACKGROUND

Nowadays, with the increasingly severe energy challenges, improving vehicle economy (in terms of fuel consumption and driving range) has become one of the key focuses for manufacturers worldwide, and there exists a crucial correlation between aerodynamic drag and vehicle economy. For example, for gasoline-powered vehicles, reducing aerodynamic drag can significantly lower fuel consumption during high-speed driving; for electric vehicles, reducing aerodynamic drag can extend their driving range. Therefore, lowering a vehicle's aerodynamic drag coefficient has become a major area of focus and research for automakers.

However, a gap generally exists between the vehicle's rear muffler and the rear bumper. The airflow discharged from the rear muffler flows disorderly along this gap, resulting in severe turbulence, which in turn increases aerodynamic drag and impairs the vehicle's economy.

### SUMMARY

To solve the above technical problem, the present disclosure provides a flow guide apparatus, a muffler system, and a vehicle.

In a first aspect, the present disclosure provides a flow guide apparatus including a flow guide body;
the flow guide body is configured to be disposed on a bottom surface of a rear muffler in a vehicle, and the flow guide body is located on a side of a rear bumper in the vehicle proximate to a front end of the vehicle;
at least one surface of the flow guide body facing away from the rear muffler forms a flow guide surface, in a fore-and-aft direction of the vehicle, the flow guide surface is inclined in a direction away from the rear muffler, and an end of the flow guide surface proximate to the rear bumper is lower than a bottom surface of the rear bumper.

In some embodiments, in the fore-and-aft direction of the vehicle, the flow guide body includes a first flow guide plate and a second flow guide plate connected in sequence;
in the fore-and-aft direction of the vehicle, the first flow guide plate is configured to be inclined and proximate to the rear muffler;
in the fore-and-aft direction of the vehicle, a thickness of the second flow guide plate gradually increases, and a surface of the second flow guide plate facing away from the rear muffler forms the flow guide surface.

In some embodiments, an included angle between the flow guide surface and a horizontal plane is not less than 10°.

In some embodiments, in the fore-and-aft direction of the vehicle, a length of the flow guide body is not less than 90 mm, and a preset gap is formed between the flow guide body and the rear bumper.

In some embodiments, the flow guide body is provided with at least two reinforcement structures that are spaced apart from each other in a width direction of the vehicle.

In some embodiments, each of the reinforcement structures includes a reinforcement rib located on a side of the flow guide body remote from the rear muffler, and the reinforcement rib extends toward the rear bumper from the flow guide body; and/or
each of the reinforcement structures includes a reinforcement protrusion, and a portion of the flow guide body protrudes toward the rear muffler to form the reinforcement protrusion.

In some embodiments, the bottom surface of the rear muffler is a curved structure protruding toward the flow guide body, and an end of the flow guide body remote from the rear bumper is attached to a lowest point of the curved structure.

In some embodiments, the flow guide apparatus further includes a bending structure located on a side of the flow guide body facing away from the rear muffler, and the bending structure and/or the flow guide body is connected to the rear muffler.

In some embodiments, the bending structure includes at least a first bending section and a second bending section, one end of the first bending section is connected to an end of the flow guide body proximate to the rear bumper, the first bending section is bent relative to the flow guide body, the other end of the first bending section is connected to one end of the second bending section, and the second bending section is bent relative to the first bending section and extends in a direction away from the flow guide body;

wherein the second bending section and/or the flow guide body is connected to the rear muffler.

In some embodiments, weight reduction structures are provided on the first bending section and/or the second bending section;
and/or the first bending section, the second bending section and the flow guide body are integrally formed as a single piece.

In a second aspect, the present disclosure provides a muffler system including a rear muffler and the flow guide apparatus.

In a third aspect, the present disclosure provides a vehicle including the flow guide apparatus or the muffler system.

Compared with the related art, the technical solutions provided by the embodiments of the present disclosure have advantages described below.

The present disclosure provides a flow guide apparatus, a muffler system, and a vehicle. The flow guide apparatus includes a flow guide body that is disposed on the bottom surface of a rear muffler in the vehicle and located on a side of the rear bumper of the vehicle proximate to the front end of the vehicle in the fore-and-aft direction of the vehicle. At least a surface of the flow guide body facing away from the rear muffler forms a flow guide surface. In the fore-and-aft direction of the vehicle, the flow guide surface is inclined in a direction away from the rear muffler and an end of the flow guide surface proximate to the rear bumper is lower than the bottom surface of the rear bumper, so that the airflow discharged from the rear muffler can flow along the flow guide surface so as to be guided downward. This prevents turbulence caused by disordered flow of the discharged airflow in the gap between the rear muffler and the rear bumper. In addition, the airflow can be prevented to a certain extent from flowing directly rearward and then impinging on the rear bumper behind the rear muffler to cause turbulence, thereby effectively reducing aerodynamic drag and improving the economy of the vehicle.

### BRIEF DESCRIPTION OF THE DRAWINGS

The accompanying drawings described below are incorporated into the specification and constitute a part of the specification, illustrate embodiments consistent with the present disclosure, and together with the specification serve to explain the principles of the present disclosure.

In order to describe technical solutions of the embodiments of the present disclosure or the related art more clearly, the accompanying drawings used in the illustration of the embodiments or the related art will be briefly introduced. Apparently, those skilled in the art may obtain other accompanying drawings based on these accompanying drawings without paying any creative effort.
FIG. 1 is a first schematic structural diagram of a flow guide apparatus according to an embodiment of the present disclosure; and
FIG. 2 is a second schematic structural diagram of a flow guide apparatus according to an embodiment of the present disclosure.

### Reference numerals:

1. Flow guide body; 11. Flow guide surface; 12. Reinforcement structure; 121. Reinforcement rib; 122. Reinforcement protrusion; 13. First flow guide plate; 14. Second flow guide plate; 2. Bending structure; 21. First bending section; 22. Second bending section; 23. Weight reduction structure.

### DETAILED DESCRIPTION

To make objectives, solutions and advantages of the present disclosure clearer, a further description for solutions of the present disclosure will be given below. It should be noted that in the absence of conflict, the embodiments of the present disclosure and the features thereof may be combined with each other.

Numerous specific details are set forth in the following description to facilitate a thorough understanding of the present disclosure. However, the present disclosure may also be practiced in ways other than those described herein. It is evident that the embodiments described in the specification are merely part of the embodiments of the present disclosure, rather than all possible embodiments.

### Embodiment I

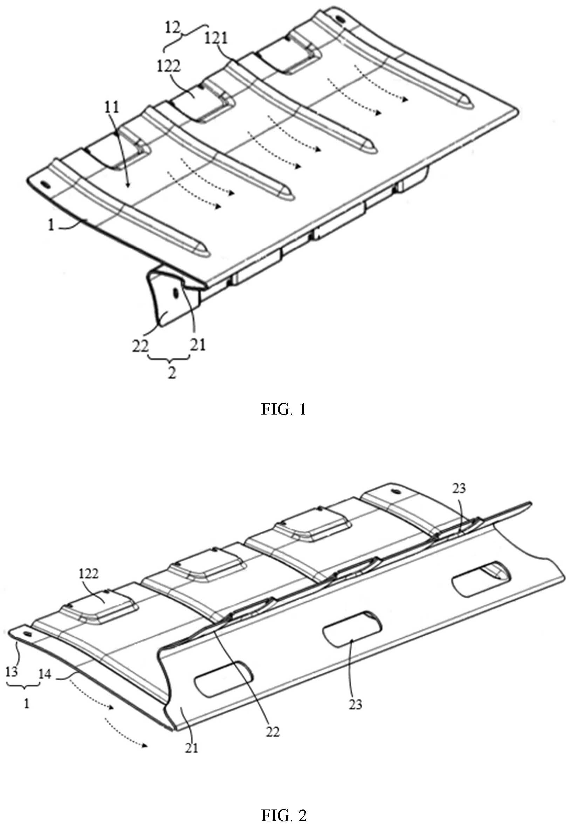

Referring to FIGS. 1 to 2, the present embodiment provides a flow guide apparatus including a flow guide body 1.

The flow guide body 1 is configured to be disposed on a bottom surface of a rear muffler in a vehicle, and in a fore-and-aft direction of the vehicle, the flow guide body 1 is located on a side of a rear bumper in the vehicle proximate to the head of the vehicle.

At least a surface of the flow guide body 1 facing away from the rear muffler forms a flow guide surface 11. In the fore-and-aft direction of the vehicle, the flow guide surface 11 is inclined in a direction away from the rear muffler, and an end of the flow guide surface 11 proximate to the rear bumper is lower than a bottom surface of the rear bumper.

In a specific implementation, the flow guide body 1 may be attached to the bottom surface of the rear muffler, with the flow guide body 1 and the rear muffler being connected by welding or screwing. In the fore-and-aft direction of the vehicle, the flow guide body 1 is located on the side of the rear bumper proximate to the front end of the vehicle, that is, in front of the rear bumper, so as to guide the airflow discharged from the rear muffler and prevent it from flowing upward along a tangent of a lower surface of the rear muffler due to a curved outer contour of the rear muffler and then impinging on the rear bumper to form turbulence.

Specifically, at least the surface of the flow guide body 1 facing away from the rear muffler is formed as the flow guide surface 11 that is inclined away from the rear muffler in the fore-and-aft direction of the vehicle, i.e., the flow guide surface 11 is a downwardly inclined slope in the fore-and-aft direction of the vehicle, so that the airflow discharged from the rear muffler can flow along the downwardly inclined flow guide surface 11 to be guided downward (the flow path of the airflow is shown by the dashed arrow in FIG. 1), thereby preventing disordered flow of the airflow discharged from the rear muffler in the gap between the rear muffler and the rear bumper, which would otherwise cause turbulence. In addition, since the end of the flow guide surface 11 proximate to the rear bumper is lower than the bottom surface of the rear bumper, the airflow can be prevented to a certain extent from flowing directly rearward and then impinging on the rear bumper behind the rear muffler to cause turbulence. Thus, the aerodynamic drag can be effectively reduced and the vehicle economy can be improved.

Tests show that the aerodynamic drag of the entire vehicle can be effectively reduced by 0.002 and the driving range can be increased by 0.5 km by guiding the air discharged from the rear muffler with the flow guide apparatus.

For example, since the flow guide body 1 is used to guide airflow for the rear muffler, it is subject to the high-temperature environment during operation of the rear muffler. Accordingly, the flow guide body 1 needs to be made of a high-temperature-resistant material, such as a metal material. For example, it may be made of copper or iron.

The flow guide apparatus of the present embodiment includes the flow guide body 1 that is disposed on the bottom surface of the rear muffler in the vehicle and located on the side of the rear bumper in the vehicle proximate to the front end of the vehicle in the fore-and-aft direction of the vehicle. At least the surface of the flow guide body 1 facing away from the rear muffler is formed as the flow guide surface 11 inclined away from the rear muffler in the fore-and-aft direction of the vehicle, so that the airflow discharged from the rear muffler can flow along the flow guide surface 11 to be guided downward, thereby preventing turbulence caused by disordered flow of the airflow discharged from the rear muffler in the gap between the rear muffler and the rear bumper. Moreover, the end of the flow guide surface 11 proximate to the rear bumper is lower than the bottom surface of the rear bumper, so that the airflow can be prevented to a certain extent from flowing directly rearward and then impinging on the rear bumper behind the rear muffler to cause turbulence, thereby effectively reducing aerodynamic drag and improving the economy of the vehicle.

Referring to FIG. 1, in some embodiments, the flow guide body 1 includes a first flow guide plate 13 and a second flow guide plate 14 connected in sequence in the fore-and-aft direction of the vehicle.

In the fore-and-aft direction of the vehicle, the first flow guide plate 13 is configured to be inclined and proximate to the rear muffler. In the fore-and-aft direction of the vehicle, a thickness of the second flow guide plate 14 gradually increases, and a surface of the second flow guide plate 14 facing away from the rear muffler forms the flow guide surface 11 inclined away from the rear muffler.

That is to say, in order to guide the air discharged from the rear muffler downward, it is necessary to configure the surface of the second flow guide plate 14 facing away from the rear muffler as the flow guide surface 11 inclined in a direction away from the rear muffler. For this purpose, only the surface of the second flow guide plate 14 facing away from the rear muffler may be configured as the flow guide surface 11 inclined in the direction away from the rear muffler, i.e., only the surface of the second flow guide plate 14 adjacent to the rear muffler is an inclined surface, and the second flow guide plate 14 itself may not be an inclined plate, in which case the thickness of the second flow guide plate 14 gradually increases in the fore-and-aft direction of the vehicle. Alternatively, the entire second flow guide plate 14 may be configured as an inclined plate inclined in a direction away from the rear muffler, in which case the surface of the second flow guide plate 14 facing away from the rear muffler is also formed as the flow guide surface 11 inclined in the direction away from the rear muffler.

In addition, the first flow guide plate 13 that is connected to the side of the second flow guide plate 14 remote from the rear bumper may be inclined toward the rear muffler, i.e., the first flow guide plate 13 is configured to be inclined upward in the fore-and-aft direction of the vehicle, so as to enhance the structural strength of the entire flow guide body 1.

Referring to FIG. 1, in some embodiments, an included angle between a plane where the flow guide surface 11 is located and a horizontal plane is not less than 10°. By reasonably setting the included angle between the plane where the flow guide surface 11 is located and the horizontal plane, the airflow discharged from the rear muffler is enabled to flow along the flow guide surface 11 to be guided downward. This avoids to a certain extent turbulence caused by direct rearward airflow flow toward the rear bumper located rearward of the rear muffler. Consequently, the aerodynamic drag can be effectively reduced and the economic performance of the vehicle can be improved.

For example, the included angle between the plane where the flow guide surface 11 is located and the horizontal plane may be 10°, 11° or 12°.

Referring to FIG. 1, in some embodiments, the length of the flow guide body 1 in the fore-and-aft direction of the vehicle is not less than 90 mm, and a preset gap is formed between the flow guide body 1 and the rear bumper. By reasonably setting the dimension of the flow guide body 1 in the fore-and-aft direction of the vehicle, it is possible to avoid not only damage to the rear bumper caused by the heat of the rear muffler being transferred to the rear bumper through the flow guide body 1 when the flow guide body 1 is excessively long and abuts against the rear bumper, but also poor airflow guiding effect arising from an excessively short flow guide body 1.

For example, the length of the flow guide body 1 in the fore-and-aft direction of the vehicle may be 90 mm, 91 mm or 92 mm.

Referring to FIGS. 1 and 2, in some embodiments, the flow guide body 1 is provided with at least two reinforcement structures 12 spaced apart from each other in the width direction of the vehicle, thereby effectively enhancing the structural strength of the entire flow guide apparatus to prolong its service life.

Referring to FIGS. 1 and 2, in some embodiments, the reinforcement structure 12 includes a reinforcement rib 121 that is located on a side of the flow guide body 1 proximate to the rear muffler or on a side of the flow guide body 1 remote from the rear muffler, through which the structural strength of the entire flow guide apparatus can be improved.

For example, the reinforcement rib 121 may extend in the fore-and-aft direction of the vehicle and from the flow guide body 1 toward the rear bumper, so that an overall extension direction of the reinforcement rib 121 is consistent with a flow direction of the airflow, thereby ensuring smooth airflow without obstruction caused by the reinforcement rib 121 extending perpendicular to or at an angle to the flow direction. Furthermore, the flow guide body 1 may be provided with a plurality of reinforcement ribs 121 that are spaced apart from each other in the width direction of the vehicle, thereby further enhancing the structural strength of the entire flow guide apparatus.

For example, the reinforcement ribs 121 may be integrally formed with the flow guide body 1 to save manufacturing processes and enhance the structural strength of the entire flow guide body 1. Alternatively, the reinforcement ribs 121 and the flow guide body 1 may be separately formed and then welded together.

Referring to FIGS. 1 and 2, in some embodiments, the reinforcement structure 12 includes a reinforcement protrusion 122. A portion of the flow guide body 1 protrudes toward the rear muffler to form the reinforcement protrusion 122, thereby enhancing the structural strength of the entire flow guide apparatus.

For example, the flow guide body 1 may be provided with a plurality of reinforcement protrusions 122 spaced apart from each other in the width direction of the vehicle, thereby further enhancing the structural strength of the entire flow guide apparatus effectively.

In addition, in the present embodiment, the flow guide body 1 may only be provided with the reinforcement ribs 121, or only be provided with the reinforcement protrusions 122. Alternatively, both the reinforcement ribs 121 and the reinforcement protrusions 122 may be provided on the flow guide body 1 to further effectively enhance the structural strength of the entire flow guide apparatus.

In some embodiments, a bottom surface of the rear muffler is a curved structure protruding toward the flow guide body 1, and an end of the flow guide body 1 remote from the rear bumper is attached to a lowest point of the curved structure.

In a specific implementation, the bottom surface of the rear muffler is formed as a curved structure protruding downward. By attaching the end of the flow guide body 1 remote from the rear bumper to the lowest point of the curved structure, the air discharged from the rear muffler is facilitated to flow smoothly along the flow guide surface 11 of the flow guide body 1, thereby being directed downward under the guidance of the flow guide surface 11. This prevents turbulence caused by disordered airflow of the airflow discharged from the rear muffler in the gap between the rear muffler and the rear bumper, effectively reducing aerodynamic drag and improving the economy of the vehicle.

Referring to FIGS. 1 and 2, in some embodiments, the flow guide apparatus further includes a bending structure 2 located on a side of the flow guide body 1 facing away from the rear muffler. The bending structure 2 and/or the flow guide body 1 is/are connected to the rear muffler. The provision of the bending structure 2 can further enhance the structural strength of the entire flow guide apparatus.

For example, both the bending structure 2 and the flow guide body 1 may be connected to the rear muffler, so as to further improve the connection strength and connection reliability between the flow guide apparatus and the rear muffler. Alternatively, only the bending structure 2 may be connected to the rear muffler, or only the flow guide body 1 may be connected to the rear muffler.

Referring to FIGS. 1 and 2, in some embodiments, the bending structure 2 includes at least a first bending section 21 and a second bending section 22. One end of the first bending section 21 is connected to an end of the flow guide body 1 proximate to the rear bumper and is bent relative to the flow guide body 1, and the other end of the first bending section 21 is connected to one end of the second bending section 22, the second bending section 22 is bent relative to the first bending section 21.

The second bending section 22 and/or the flow guide body 1 is/are connected to the rear muffler.

For example, both the second bending section 22 and the flow guide body 1 may be connected to the rear muffler, so as to further improve the connection strength and connection reliability between the flow guide apparatus and the rear muffler. Alternatively, only the second bending section 22 may be connected to the rear muffler, or only the flow guide body 1 may be connected to the rear muffler.

Referring to FIG. 2, in some embodiments, weight reduction structures 23 are provided on the first bending section 21 and/or the second bending section 22, so that a lightweight design of the entire flow guide apparatus can be realized. For example, the weight reduction structures 23 may be provided only on the first bending section 21, only on the second bending section 22, or on both the first bending section 21 and the second bending section 22 to further reduce the weight of the entire flow guide apparatus while ensuring that the entire flow guide apparatus has sufficient structural strength.

For example, the weight reduction structure 23 may be a through weight reduction slot. A plurality of weight reduction slots may be provided and arranged at intervals in the width direction of the vehicle. Alternatively, the weight reduction structure 23 may be a blind hole.

In some embodiments, the first bending section 21 and the second bending section 22 may be integrally formed to save manufacturing processes and enhance the structural strength of the entire bending structure 2.

In some embodiments, the bending structure 2 and the flow guide body 1 may be integrally formed to save manufacturing processes and enhance the structural strength of the entire flow guide apparatus.

### Embodiment II

Referring to FIGS. 1 to 2, the present embodiment further provides a muffler system including a rear muffler and a flow guide apparatus.

In the muffler system of the present embodiment, the flow guide body 1 is disposed on the bottom surface of the rear muffler, and in the fore-and-aft direction of the vehicle, the flow guide body 1 is located on a side of the rear bumper of the vehicle proximate to the front end of the vehicle. In the fore-and-aft direction of the vehicle, the surface of the flow guide body 1 facing away from the rear muffler is formed as the flow guide surface 11 inclined in a direction away from the rear muffler, so that the airflow discharged from the rear muffler can flow along the flow guide surface 11 to be guided downward. This prevents turbulence caused by disordered flow of the discharged airflow in the gap between the rear muffler and the rear bumper. In addition, the end of the flow guide surface 11 proximate to the rear bumper is lower than the rear bumper, so that the airflow can be prevented to a certain extent from flowing directly rearward and then impinging on the rear bumper behind the rear muffler to cause turbulence, thereby effectively reducing aerodynamic drag and improving the economy of the vehicle.

The specific structure and implementation principle of the flow guide apparatus in the present embodiment are the same as those of the flow guide apparatus provided in Embodiment I, and the same or similar technical effects can be achieved, which will not be repeated herein, and reference may be made to the description of Embodiment I for details.

### Embodiment III

Referring to FIGS. 1 to 2, the present embodiment further provides a vehicle including the flow guide apparatus or the muffler system.

In the vehicle of the present embodiment, the flow guide body 1 is disposed on the bottom surface of the rear muffler, and in the fore-and-aft direction of the vehicle, the flow guide body 1 is located on a side of the rear bumper of the vehicle proximate to the front end of the vehicle. In the fore-and-aft direction of the vehicle, the surface of the flow guide body 1 facing away from the rear muffler is formed as the flow guide surface 11 inclined in a direction away from the rear muffler, so that the airflow discharged from the rear muffler can flow along the flow guide surface 11 to be guided downward. This prevents turbulence caused by disordered flow of the discharged airflow in the gap between the rear muffler and the rear bumper. In addition, the end of the flow guide surface 11 proximate to the rear bumper is lower than the rear bumper, so that the airflow can be prevented to a certain extent from flowing directly rearward and then impinging on the rear bumper behind the rear muffler to cause turbulence, thereby effectively reducing aerodynamic drag and improving the economy of the vehicle.

The specific structure and implementation principle of the flow guide apparatus in the present embodiment are the same as those of the flow guide apparatus provided in Embodiment I, and the same or similar technical effects can be achieved, which will not be repeated herein, and reference may be made to the description of Embodiment I for details.

The specific structure and implementation principle of the muffler system in the present embodiment are the same as those of the muffler system provided in Embodiment II, and the same or similar technical effects can be achieved, which will not be repeated herein, and reference may be made to the description of Embodiment II for details.

It should be noted that relational terms such as "first" and "second" used herein are merely used to distinguish one entity or operation from another, and do not necessarily require or imply any such actual relationship or order between these entities or operations. Furthermore, the term "comprises/includes" or any other variation thereof is intended to cover a non-exclusive inclusion, such that a process, method, article or apparatus that includes a list of elements includes not only those elements but also other elements not expressly listed, or elements inherent to such process, method, article or apparatus. Without further limitation, an element defined by the phrase "comprising/including a..." does not exclude the presence of other identical elements in the process, method, article or apparatus including the element.

The above are merely specific embodiments of the present disclosure, enabling those skilled in the art to understand or implement the present disclosure. Various modifications to these embodiments will be readily apparent to those skilled in the art, and the general principles defined herein may be implemented in other embodiments without departing from the spirit or scope of the present disclosure. Therefore, the present disclosure will not be limited to the embodiments described herein, but is to be accorded the widest scope consistent with the principles and novel features disclosed herein.

## Claims

1. A flow guide apparatus, comprising a flow guide body;
the flow guide body is configured to be disposed on a bottom surface of a rear muffler in a vehicle, and the flow guide body is located on a side of a rear bumper in the vehicle proximate to a front end of the vehicle;
at least one surface of the flow guide body facing away from the rear muffler forms a flow guide surface, in a fore-and-aft direction of the vehicle, the flow guide surface is inclined in a direction away from the rear muffler, and an end of the flow guide surface proximate to the rear bumper is lower than a bottom surface of the rear bumper.

2. The flow guide apparatus according to claim 1, wherein in the fore-and-aft direction of the vehicle, the flow guide body comprises a first flow guide plate and a second flow guide plate connected in sequence;
in the fore-and-aft direction of the vehicle, the first flow guide plate is configured to be inclined and proximate to the rear muffler;
in the fore-and-aft direction of the vehicle, a thickness of the second flow guide plate gradually increases, and a surface of the second flow guide plate facing away from the rear muffler forms the flow guide surface.

3. The flow guide apparatus according to claim 2, wherein an included angle between the flow guide surface and a horizontal plane is not less than 10°.

4. The flow guide apparatus according to claim 1, wherein in the fore-and-aft direction of the vehicle, a length of the flow guide body is not less than 90 mm, and a preset gap is formed between the flow guide body and the rear bumper.

5. The flow guide apparatus according to claim 1, wherein the flow guide body is provided with at least two reinforcement structures that are spaced apart from each other in a width direction of the vehicle.

6. The flow guide apparatus according to claim 5, wherein each of the reinforcement structures comprises a reinforcement rib located on a side of the flow guide body remote from the rear muffler, and the reinforcement rib extends toward the rear bumper from the flow guide body; and/or
each of the reinforcement structures comprises a reinforcement protrusion, and a portion of the flow guide body protrudes toward the rear muffler to form the reinforcement protrusion.

7. The flow guide apparatus according to claim 1, wherein the bottom surface of the rear muffler is a curved structure protruding toward the flow guide body, and an end of the flow guide body remote from the rear bumper is attached to a lowest point of the curved structure.

8. The flow guide apparatus according to any one of claims 1 to 7, further comprising a bending structure located on a side of the flow guide body facing away from the rear muffler, and the bending structure and/or the flow guide body is connected to the rear muffler.

9. The flow guide apparatus according to claim 8, wherein the bending structure comprises at least a first bending section and a second bending section, one end of the first bending section is connected to an end of the flow guide body proximate to the rear bumper, the first bending section is bent relative to the flow guide body, the other end of the first bending section is connected to one end of the second bending section, and the second bending section is bent relative to the first bending section and extends in a direction away from the flow guide body;
wherein the second bending section and/or the flow guide body is connected to the rear muffler.

10. The flow guide apparatus according to claim 9, wherein weight reduction structures are provided on the first bending section and/or the second bending section;
and/or the first bending section, the second bending section and the flow guide body are integrally formed as a single piece.

11. A muffler system, comprising a rear muffler and the flow guide apparatus according to any one of claims 1 to 10.

12. A vehicle, comprising the flow guide apparatus according to any one of claims 1 to 10 or the muffler system according to claim 11.
